(19) Europäisches Patentamt / European Patent Office / Office européen des brevets

(11) **EP 3 968 218 A1**

(12) **EUROPEAN PATENT APPLICATION**
published in accordance with Art. 153(4) EPC

(43) Date of publication:
**16.03.2022 Bulletin 2022/11**

(21) Application number: **20844966.0**

(22) Date of filing: **14.07.2020**

(51) Int Cl.:
***G06K 9/00*** *(2022.01)*

(86) International application number:
**PCT/CN2020/101925**

(87) International publication number:
**WO 2021/012993 (28.01.2021 Gazette 2021/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.07.2019 CN 201910672521**

(71) Applicant: **GUANGDONG OPPO MOBILE TELECOMMUNICATIONS CORP., LTD.**
**Dongguan, Guangdong 523860 (CN)**

(72) Inventor: **WU, Anping**
**Dongguan, Guangdong 523860 (CN)**

(74) Representative: **Mewburn Ellis LLP**
**Aurora Building**
**Counterslip**
**Bristol BS1 6BX (GB)**

(54) **FINGERPRINT ACQUISITION METHOD AND RELATED PRODUCTS**

(57) A fingerprint collecting method and related products applicable for an electronic device are provided. A distance between a target object and the electronic device is obtained by a processing circuit. A first image of the target object is captured through a first component set of an ultrasonic module, upon determining that the distance between the target object and electronic device is less than a first preset distance. Finger image recognition is conducted on the first image by the processing circuit, a mapping image corresponding to a finger image is determined by the processing circuit upon recognizing that the first image contains the finger image, and a second component set of the ultrasonic module corresponding to the mapping image is waken up by the processing circuit. The second component set of the ultrasonic module is controlled by the ultrasonic module to collect fingerprints to obtain a target fingerprint image. The present application makes a region for collecting the fingerprints accurately match the mapping image on the display screen corresponding to the finger, such that accuracy of collecting fingerprint image is improved, while excess energy consumption is reduced during fingerprint collection.

OBTAIN A DISTANCE BETWEEN A TARGET OBJECT AND AN ELECTRONIC DEVICE — 101

CAPTURE A FIRST IMAGE OF THE TARGET OBJECT THROUGH A FIRST COMPONENT SET OF THE ULTRASONIC MODULE, UPON DETERMINING THAT THE DISTANCE BETWEEN THE TARGET OBJECT AND THE ELECTRONIC DEVICE IS LESS THAN A FIRST PRESET DISTANCE — 102

CONDUCT FINGER IMAGE RECOGNITION ON THE FIRST IMAGE, AND DETERMINE AN IMAGE MAPPING REGION CORRESPONDING TO A FINGER IMAGE AND ON THE DISPLAY SCREEN, UPON RECOGNIZING THAT THE FIRST IMAGE CONTAINS THE FINGER IMAGE — 103

WAKE UP A SECOND COMPONENT SET OF THE ULTRASONIC MODULE CORRESPONDING TO THE MAPPING IMAGE — 104

CONTROL THE SECOND COMPONENT SET OF THE ULTRASONIC MODULE TO COLLECT FINGERPRINTS TO OBTAIN A TARGET FINGERPRINT IMAGE — 105

FIG. 1C

**Description**

TECHNICAL FIELD

This disclosure relates to the technical field of fingerprint recognition, and in particular to a fingerprint collecting method and related products.

BACKGROUND

Fingerprint recognition refers to identification by comparing detailed feature points of different fingerprints. Fingerprint recognition technology involves many disciplines such as image processing, pattern recognition, computer vision, mathematical morphology, wavelet analysis, etc. Each person's fingerprint is different, and fingerprints have obvious differences even among ten fingers of the same person, such that fingerprints can be used for identification.
In an existing screen fingerprint unlocking process, an unlocking module is generally disposed at a fixed position or under a physical key (e.g. Home key). Due to a fixed size of the physical key, for people with large fingers, there may exist a problem that a fingerprint recognition area is too small and extracted fingerprints are not comprehensive, while for people with tiny fingers, there may exist a problem that a fingerprint recognition area is too large and energy is wasted.

SUMMARY

A fingerprint collecting method and related products are provided in implementations of the present disclosure. By detecting sizes of users' fingers and enabling fingerprint recognition regions with various sizes according to the sizes of the users' fingers, a size of a fingerprint recognition area matches a size of the user's finger accurately, accuracy of capturing fingerprint images is improved, and energy consumption of fingerprint collection is reduced.
In a first aspect, an electronic device is provided in implementations of the present disclosure. The electronic device includes a processing circuit, and multiple ultrasonic modules and a display screen which are connected with the processing circuit. The processing circuit is configured to obtain a distance between a target object and the electronic device. The multiple ultrasonic modules are configured to capture a first image of the target object through a first component set of the multiple ultrasonic modules, upon determining that the distance between the target object and the electronic device is less than a first preset distance. The first component set includes P emitters and Q receivers, where P and Q are positive integers. The processing circuit is further configured to conduct finger image recognition on the first image, determine a mapping image on the display screen corresponding to a finger image upon recognizing that the first image contains the finger image, and wake up a second component set of the multiple ultrasonic modules corresponding to the mapping image. The second component set includes M emitters and N receivers, M and N are positive integers, and P<M and Q<N. The multiple ultrasonic modules are further configured to control the second component set of the plurality of ultrasonic modules to collect fingerprints to obtain a target fingerprint image.
In a second aspect, a fingerprint collecting method is provided in implementations of the present disclosure. The method is for an electronic device, and includes the following. A distance between a target object and the electronic device is obtained. A first image of the target object is captured through a first component set of an ultrasonic module, upon determining that the distance between the target object and the electronic device is less than a first preset distance. The first component set includes P emitters and Q receivers, where P and Q are positive integers. Finger image recognition is conducted on the first image, and upon recognizing that the first image contains a finger image, a mapping image on a display screen corresponding to the finger image is determined. A second component set of the ultrasonic module corresponding to the mapping image is waken up. The second component set includes M emitters and N receivers, and M and N are positive integers. The second component set of the plurality of ultrasonic modules is controlled to collect fingerprints to obtain a target fingerprint image.
In a third aspect, an electronic device is provided in implementations of the present disclosure. The electronic device includes a processor, a memory, a communication interface, and one or more programs. The one or more programs are stored in the memory and are configured to be executed by the processor, and includes instructions for performing any of methods in the second aspect.
In a fourth aspect, a computer-readable storage medium is provided in implementations of the present disclosure, and is configured to store computer programs for electronic data interchange (EDI). The computer programs are operable with a computer to perform the instructions in the operations in any of methods in the second aspect.
In a fifth aspect, a computer program product is provided in implementations of the present disclosure. The computer program product includes a non-transitory computer readable medium configured to store computer programs which, when executed, are operable with a computer to perform some or all operations in any of methods described in the second aspect. The computer program product may be a software installation package.

BRIEF DESCRIPTION OF THE DRAWINGS

The following will give a brief introduction to the accompanying drawings involved in implementations of the present disclosure.

FIG. 1A is a schematic structural view illustrating an electronic device provided in implementations of the present disclosure.
FIG. 1B is a schematic structural view illustrating another electronic device provided in implementations of the present disclosure.
FIG. 1C is a schematic flowchart illustrating a fingerprint collecting method provided in implementations of the present disclosure.
FIG. ID is a schematic view illustrating a process of detecting distance provided in implementations of the present disclosure.
FIG. IE is a schematic view illustrating obtainment of a second component set provided in implementations of the present disclosure.
FIG. 2 is a schematic flowchart illustrating another fingerprint collecting method provided in implementations of the present disclosure.
FIG. 3 is a schematic structural view illustrating another electronic device provided in implementations of the present disclosure.
FIG. 4 is a block view illustrating functional units of a fingerprint collecting apparatus provided in implementations of the present disclosure.

DETAILED DESCRIPTION

In order for those skilled in the art to better understand technical solutions of implementations, technical solutions of implementations will be described clearly and completely with reference to accompanying drawings in the implementations. Apparently, implementations hereinafter described are merely some implementations, rather than all implementations, of present disclosure. All other implementations obtained by those of ordinary skill in the art based on the implementations herein without creative efforts shall fall within the protection scope of the present disclosure.

An electronic device referred to herein may include handheld devices, in-vehicle devices, wearable devices (smart watches, smart bands, wireless earphones, augmented reality/virtual reality devices, and smart glasses), computing devices that have wireless communication functions or other processing devices connected with a wireless modem, as well as various forms of user equipments (UE), mobile stations (MS), terminal devices, and the like. For ease of description, the above-mentioned devices are collectively referred to as an electronic device.

The following will give a detailed introduction to implementations of the present disclosure.

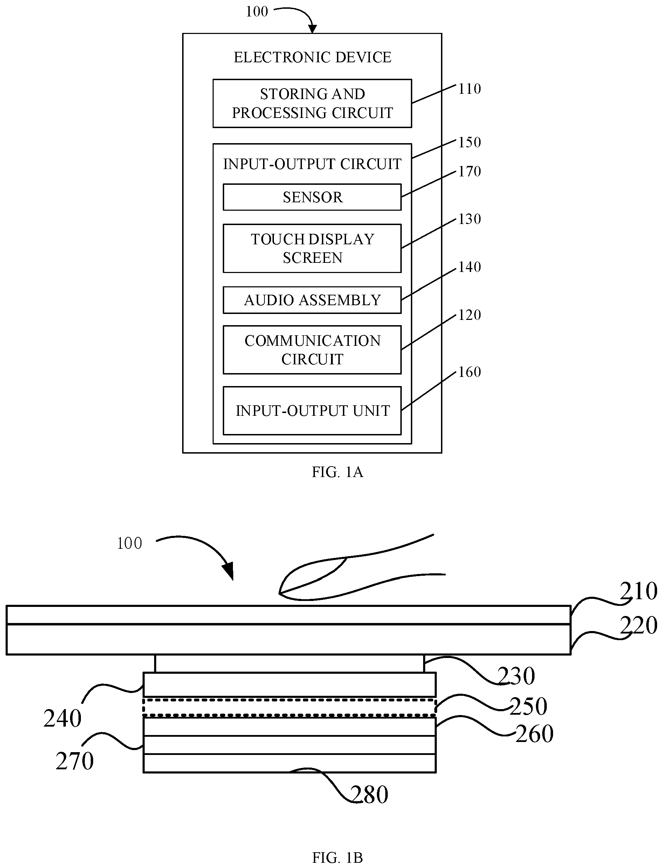

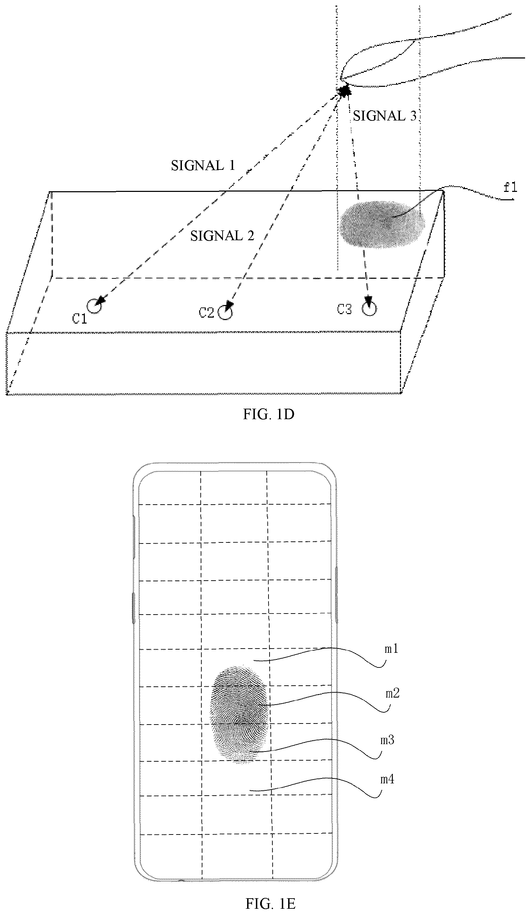

FIG. 1A is a schematic structural view illustrating an electronic device provided in implementations of the present disclosure. Reference can be made to FIG. 1A, an electronic device 100 includes a storing and processing circuit 110, and a sensor 170 connected with the storing and processing circuit 110.

The electronic device 100 may include a control circuit which may include the storing and processing circuit 110. The storing and processing circuit 110 may include a memory, such as a hard disk drive memory, a nonvolatile memory (such as a flash memory or other electronic programmable read-only memories for forming a solid-state drive, etc.), a volatile memory (such as a static or dynamic random access memory), etc., which is not limited in the implementations of the present disclosure. The storing and processing circuit 110 includes a processing circuit which is configured to control operation of the electronic device 100. The processing circuit can be implemented based on one or more microprocessors, microcontrollers, digital signal processors, baseband processors, power management units, audio codec chips, application specific integrated circuits (ASIC), display driver integrated circuits, etc.

The storing and processing circuit 110 can be configured to run software in the electronic device 100, such as internet browsing applications, voice over internet protocol (VOIP) telephone call applications, email applications, media playing applications, operating system functions, etc. These software can be used to perform some control operations, such as image capture based on a camera, ambient light measurement based on an ambient light sensor, proximity sensor measurement based on a proximity sensor, an information display function based on a status indicator such as a status indicating lamp of a light-emitting diode (LED), touch event detection based on a touch sensor, a function associated with displaying information on multiple (e.g. layered) display screens, an operation associated with executing a wireless communication function, an operation associated with collecting and generating audio signals, a control operation associated with collecting and processing button-press event data, and other functions in the electronic device 100, which are not limited in the implementations of the present disclosure.

The electronic device 100 may include an input-output circuit 150, which may be configured to enable the electronic device 100 to input and output data, that is, allow the electronic device 100 to receive data from external devices, and also allow the electronic device 100 to output data from the electronic device 100 to the external devices. The input-output circuit 150 may further include a sensor 170. The sensor 170 may include an ultrasonic fingerprint recognition module, and may also include an ambient light sensor, a proximity sensor based on light and capacitance, a touch sensor (e.g., a light-based touch sensor and/or a capacitance-based touch sensor, the touch sensor may be a part of a touch display screen, and may also be used independently as a touch sensor structure), an acceleration sensor, and other sensors, etc. The ultrasonic fingerprint recognition module may be integrated under a screen, or the ultrasonic fingerprint recognition module may be disposed on a side surface or a back surface of the electronic device, which is not limited here. The ultrasonic fingerprint recognition module can be configured to capture fingerprint images.

The input-output circuit 150 may further include one or more display screens, such as a display screen 130. The display screen 130 may include one or a combination of a liquid crystal display (LCD) screen, an organic light-emitting diode (OLED) display screen, an electronic ink display screen, a plasma display screen, and a display screen using other display technologies. The display screen 130 may include a touch sensor array (i.e., the display screen 130 may be a touch display screen). A touch sensor may be a capacitive touch sensor formed by an array of transparent touch sensor electrodes (e.g., indium tin oxide (ITO) electrodes), or may be a touch sensor formed by other touch technologies, such as sonic touch, pressure sensitive touch, resistive touch, optical touch, etc., which is not limited in the implementations of the present disclosure.

The electronic device 100 may further include an audio assembly 140 which may be configured to provide audio input and output functions for the electronic device 100. The audio assembly 140 in the electronic device 100 may include a speaker, a microphone, a buzzer, a tone generator, and other assemblies configured to generate and detect sounds.

A communication circuit 120 may be configured to provide the electronic device 100 with an ability to communicate with external devices. The communication circuit 120 may include an analog and digital input-output interface circuit, and a wireless communication circuit based on radio frequency signals and/or optical signals. The wireless communication circuit in the communication circuit 120 may include a radio frequency (RF) transceiver circuit, a power amplifier circuit, a low noise amplifier, a switch, a filter, and an antenna. For example, the wireless communication circuit in the communication circuit 120 may include a circuit configured to support near field communication (NFC) by emitting and receiving near field coupled electromagnetic signals. For example, the communication circuit 120 may include a near field communication antenna and a near field communication transceiver. The communication circuit 120 may also include a cellular phone transceiver and antenna, a wireless local area network transceiver circuit and antenna, etc.

The electronic device 100 may further include a battery, an electric power management circuit, and other input-output units 160. The input-output units 160 may include a button, a lever, a click wheel, a scroll wheel, a touch panel, a keypad, a keyboard, a camera, a LED, and other status indicators, etc.

A user can input commands, through the input-output circuit 150, to control operation of the electronic device 100, and can use output data of the input-output circuit 150 to receive state information and other outputs from the electronic device 100.

In a possible example, the ultrasonic fingerprint recognition module under the screen is taken for example. As illustrated in FIG. 1B, which is a schematic structural view illustrating an electronic device, the electronic device 100 may include a glass cover 210 (Cover glass), a display screen 220 (OLED), an adhesive layer 230 (Adhesive), a substrate 240 (thin film transistor (TFT) Glass), a pixel layer 250 (Pixel), a piezoelectric material layer 260 (Copolymer), an Ag ink layer 270, and a solidification adhesive layer 280 (die attach film (DAF)). Of course, a film may be disposed above the glass cover and may be a toughened film, which is configured to protect the display screen of the electronic device.

Furthermore, the ultrasonic fingerprint recognition module may include a TFT glass layer, a pixel layer, an Ag ink layer, and a solidification adhesive layer. The TFT glass layer is configured for metal wiring and material coating. The pixel layer functions as a metal electrode which is embedded on the TFT glass and functions as a cathode of ultrasonic emission/reception. The copolymer is also known as a piezoelectric transduction material which can be configured for conversion between "material deformation and voltage". The Ag ink layer functions as an anode of the ultrasonic emission/reception. The DAF is a solidification adhesive configured to protect the ultrasonic fingerprint recognition module. The adhesive layer is an adhesive which is configured to bond the ultrasonic fingerprint recognition module to the bottom of the OLED screen.

In specific implementations, the ultrasonic fingerprint recognition module may include two states, i.e., TX state (for emitting ultrasonic waves) and RX state (for receiving ultrasonic waves).

In the TX state, by providing high-frequency (usually 10 megahertz (MHz) level) oscillation signals, such as sine waves, at electrodes (a pixel cathode and an Ag ink anode) of two ends of the copolymer (a piezoelectric material), the copolymer can generate vibrations in response to frequencies and emit ultrasonic waves. After penetrating through the OLED screen, upward transmitted ultrasonic waves reach a fingerprint in contact with a surface of the screen. When a fingerprint valley and a fingerprint ridge are cling to the screen, an acoustic resistance characteristic of air in the fingerprint valley is quite different from that of glass on the surface of the screen, and an acoustic resistance characteristic of skin tissue of the fingerprint ridge is relatively different from that of the glass on the surface of the screen, therefore, the fingerprint valley and the fingerprint ridge bring different reflected signal intensities to the ultrasonic waves.

In the RX state, when reflected ultrasonic waves penetrate through the display screen again and reach the ultrasonic fingerprint recognition module (Pixel-Copolymer-Ag ink), the copolymer is caused to vibrate and generate electrical signals, copolymers of pixel regions corresponding to fingerprint valleys and fingerprint ridges at different positions have different vibration intensities, therefore, potential differences received by pixels at different positions are different (Ag ink layer is isopotential). The potential differences are converted into two-dimensional image signals, thereby obtaining an ultrasonic fingerprint image.

The electronic device described in FIG. 1A and FIG. 1B are configured to realize the following functions. The processing circuit is configured to obtain a distance between a target object and the electronic device. A ultrasonic module is configured to capture a first image of the target object through a first component set of the ultrasonic module, upon determining that the distance between the target object and the electronic device is less than a first preset distance. The first component set includes P emitters and Q receivers, where P and Q are positive integers. The processing circuit is further configured to conduct finger image recognition on the first image, determine a mapping image on the display screen corresponding to a finger image upon recognizing that the first image contains the finger image, and wake up a second component set of the ultrasonic module corresponding to the mapping image. The second component set includes M emitters and N receivers, where M and N are positive integers, and P<M and Q<N. The ultrasonic module is further configured to control the second component set of the ultrasonic module to collect fingerprint to obtain a target fingerprint image.

In a possible example, in terms of obtaining the distance between the target object and the electronic device, the processing circuit is specifically configured to control P emitters to emit detecting signals and Q receivers to receive the detecting signals, determine multiple signal detecting distances according to time differences between emitting the detecting signals and receiving the detecting signals, and determine a minimum distance among the multiple signal detecting distances as the distance between the target object and the electronic device.

In a possible example, the first image includes multiple images captured within a preset period, and in terms of determining the mapping image on the display screen corresponding to the finger image, the processing circuit is specifically configured to obtain multiple finger image areas corresponding to the multiple images, and determine, according to the multiple finger image areas, a finger-image area difference corresponding to adjacent images in the multiple images; determine a shooting distance difference corresponding to the finger-image area difference; determine the mapping image corresponding to the finger image, according to the finger-image area difference and the shooting distance difference.

In a possible example, a fingerprint collecting region of the ultrasonic module is a partial or entire touch region of the display screen, and the fingerprint collecting region has A fingerprint pre-collecting partitions, where A is an integer greater than 1. In terms of waking up the second component set of the ultrasonic module corresponding to the mapping image, the processing circuit is configured to determine B fingerprint partitions corresponding to the mapping image, the B fingerprint pre-collecting partitions being part of the A fingerprint pre-collecting partitions, where B is an integer and I::;B<A; obtain a proportion of a mapping region image relative to each of the B fingerprint pre-collecting partitions, where B mapping region images collectively form the mapping image; determine whether the proportion of the mapping region image is greater than a first preset proportion; obtain a first fingerprint pre-collecting partition of which the proportion of the mapping region is greater than the first preset proportion, and wake up M emitters and N receivers corresponding to the first fingerprint pre-collecting partition as the second component set.

In a possible example, after determining whether the proportion of the mapping region image relative to each of the B fingerprint pre-collecting partitions is greater than the first preset proportion, the processing circuit is further configured to obtain a second fingerprint pre-collecting partition of which the proportion of the mapping region image is not greater than the first preset proportion, and a target mapping image corresponding to the second fingerprint pre-collecting partition; use a center of the mapping image as a symmetrical center, and conduct centrosymmetric transformation on the target mapping image to obtain a symmetrical mapping image; form a new mapping image according to the symmetrical mapping image and the mapping image; and wake up the second component set of the ultrasonic module corresponding to the new mapping image.

In a possible example, the processing circuit is further configured to conduct color conversion on components in the second component set and fingerprint pre-collecting partitions corresponding to the second component set, to prompt a user to put a finger on the fingerprint pre-collecting partitions corresponding to the second component set, so that the ultrasonic module controls the second component set of the ultrasonic module to collect the fingerprints to obtain the target fingerprint image.

It can be seen that, the electronic device provided in the implementations of the present disclosure includes a processing circuit, and an ultrasonic module and a display screen which are connected with the processing circuit. The distance between the target object and the electronic device is obtained by the processing circuit. A first image of the target object is captured through a first component set of the ultrasonic module, upon determining that the distance between the target object and electronic device is less than a first preset distance. The finger image recognition is conducted on the first image by the processing circuit, the mapping image corresponding to the finger image is determined by the processing circuit upon recognizing that the first image contains the finger image, and a second component set of the ultrasonic module corresponding to the mapping image is waken up. The second component set of the ultrasonic module is controlled by the ultrasonic module to collect the fingerprints to obtain the target fingerprint image. This process makes a region for collecting the fingerprints accurately match the mapping image on the display screen corresponding to the finger images, such that accuracy in collecting fingerprint image is improved, while excess energy consumption is reduced during fingerprint collection.

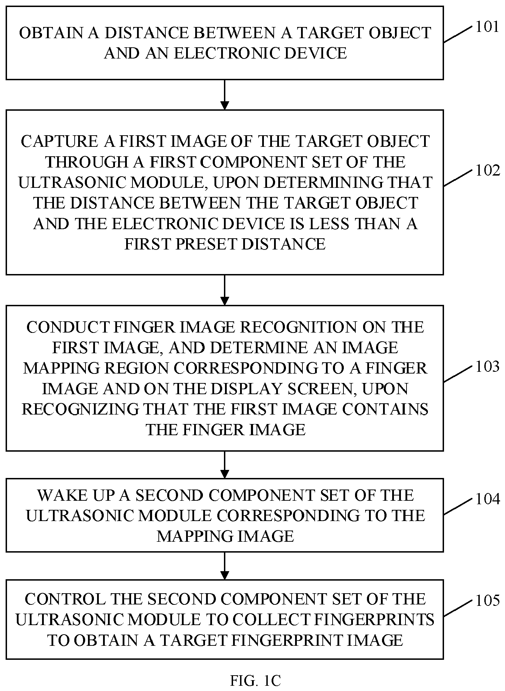

FIG. 1C is a schematic flowchart illustrating a fingerprint collecting method provided in implementations of the present disclosure. Reference can be made to FIG. 1C, the method is applicable to the electronic device illustrated in FIG. 1A, and the method includes the following.

101, a distance between a target object and the electronic device is obtained.

The electronic device includes an ultrasonic module(s), and an emitter in the ultrasonic module can emit ultrasonic signals continuously. If the target object exists within a range of ultrasonic emission, the ultrasonic signals will be reflected by the target object, and a receiver in the ultrasonic module can receive reflected ultrasonic signals. Therefore, a processing circuit can determine whether there is the target object which is moving close to the electronic device according to emitted and received ultrasonic signals, and determine the distance between the target object and the electronic device.

Optionally, at 101, the distance between the target object and the electronic device is obtained by the processing circuit as follows.

11, P emitters are controlled to emit detecting signals and Q receivers are controlled to receive the detecting signals.

12, multiple signal detecting distances are determined according to time differences between emitting the detecting signals and receiving the detecting signals.

13, a minimum distance among the multiple signal detecting distances is determined as the distance between the target object and the electronic device.

A first component set is a component set in the ultrasonic module always in an on state. The first component set includes P emitters and Q receivers, where P may be equal to or different from Q. Reference can be made to FIG. ID, which is a schematic view illustrating a process of detecting a distance provided in the implementations of the present disclosure. As illustrated in FIG. ID, emitter C1, emitter C2, and emitter C3 all emit ultrasonic signals outward. Three emitters may emit simultaneously according to the same period, for example, the three emitters emit the ultrasonic signals simultaneously every 0.1 s (second); the three emitters may also emit sequentially according to a fixed interval, for example, after emitter 1 emits ultrasonic signals, emitter 2 emits ultrasonic signals 0.1 s later, and after emitter 2 emits ultrasonic signals, emitter 3 emits ultrasonic signals 0.1 s later. Each emitter may correspond to a receiver, one receiver may correspond to multiple emitters, one receiver may also correspond to one emitter, or an emitter and a receiver may be combined with each other as a transceiver. In FIG. ID, emitter C1, emitter C2, and emitter C3 respectively correspond to receiver C1, receiver C2, and receiver C3, that is, C1, C2, C3 all have receiving and emitting functions at the same time, or a distance between an emitter and a receiver is extremely close, such as less than 1 cm (centimeter), such that a same mark can be used.

As illustrated in Table 1, the processing circuit records time when each emitter emits ultrasonic signals, and time when each receiver receives ultrasonic signals.

Table 1 ultrasonic signals emission and reception timetable

|  | signal emission time (s) | signal reception time (s) | emitter | receiver |
|---|---|---|---|---|
| signal 1 | 0:0000 | 0:0001 | emitter C1 | receiver C1 |
| signal 2 | 0:0000 | 0:0002 | emitter C2 | receiver C2 |
| signal 3 | 0:0000 | 0:0003 | emitter C3 | receiver C3 |

It can be seen from Table 1 that, time differences between emitting the detecting signals and receiving the detecting signals respectively corresponding to C1, C2, and C3 are 0.1 ms (millisecond), 0.2 ms, and 0.3 ms. A propagation speed of an ultrasonic signal in air is 340 m/s, so corresponding distances between the target object and the electronic device are 0.034 m, 0.068 m, and 0.102 m, thereby the distance between the target object and the electronic device is determined as 0.034 m.

102, a first image of the target object is captured through the first component set of the ultrasonic module, upon determining that the distance between the target object and the electronic device is less than a first preset distance. The first component set includes P emitters and Q receivers, where P and Q are positive integers.

The first preset distance is set in advance, which may be 5 cm or 2 cm, and when the distance between the target object and the electronic device is less than the first preset distance, the first image of the target object is captured through the first component set of the ultrasonic module. In can be seen that, the first component set is a component set in the ultrasonic module always in the on state, and the first component includes P emitters and Q receivers, and also includes an image generation part which can generate the first image based on reflected waves received by the receivers.

103, finger image recognition is conducted on the first image, and a mapping image corresponding to a finger image is determined, upon recognizing that the first image contains the finger image.

When any target object approaches a front side of the electronic device, the ultrasonic module can detect proximity of the any target object. Therefore, the target object for distance detection and image capture through the ultrasonic module may not be a finger, or not all of the target object be a finger. Therefore, it is necessary to recognize the first image to determine that the first image contains the finger image. The first image can be recognized by matching the first image with a finger template image, or by extracting features of the first image and matching these features with finger image features. When the first image is recognized as containing the finger image, the finger image is identified and obtained, and then a possible mapping image of the finger image on the screen of the electronic device is determined, including a location, a shape, and a size of the finger image which may be mapped on the screen of the electronic device.

Optionally, at 103, the first image includes multiple images captured within a preset period. In terms of determining the mapping image on the display screen corresponding to the finger image, the following operations may be included.

31. multiple finger image areas corresponding to the multiple images are obtained, and a finger-image area difference corresponding to adjacent images in the multiple images is determined according to the multiple finger image areas.

32. a shooting distance difference corresponding to the finger-image area difference is determined.

33. a mapping image corresponding to the finger image is determined, according to the finger-image area difference and the shooting distance difference.

After determining the finger image in the first image, an area of the finger image need to be determined. The area here is an image plane area which is usually about 1 cm$^2$, and a difference of the image plane area between fingers of an adult man and a young child is large. After obtaining the area of the finger image, because the finger is distanced away from the electronic device, a shot finger image area is different from the mapping image when a finger actually falls on a plane of the electronic device.

In the implementations of the present disclosure, the first image includes multiple images of the target object captured according to a first period, which may be obtained according to a period of 0.1 ms as an image 1, an image 2, and an image 3, ect. Each of the multiple images is getting closer to the screen of the electronic device, and distances between the target object and the electronic device can be determined according to time differences between the emitters emitting ultrasonic signals and the receivers receiving ultrasonic signals. For example, image 1 corresponds to a distance L1 to the electronic device, the image 2 corresponds to a distance L2 to the electronic device, the image 3 corresponds to a distance L3 to the electronic device, and assuming that an initially detected distance between the target object and the electronic device is L. In addition, finger image areas in the image 1, the image 2, and the image 3 are S1, S2, and S3 respectively, and when an initially detected distance between the target object and the electronic device is L, a finger image area of the target object is S. Therefore, the mapping image corresponding to the finger image can be determined according to the following formula: $\frac{L1-L2}{L-0} = \frac{S2-S1}{S0-S}$ (1), where 50 represents the mapping image corresponding to the finger image of the target object. Because a time taken for a distance between the finger image and the electronic device to change from $L$ to 0, is the same as a time taken for an area of the finger image to change from $S0$ to $S$, the above formula (1) holds, and 50 can be calculated according to the formula (1).

In addition, the target object may not approach the electronic device at a constant speed, therefore, in the formula (1), $L1$ - $L2$ may be replaced with a mean value $Lavg$ of multiple distance differences, for example, $Lavg = \frac{[(L1-L2)+(L2-L3)]}{2}$ , and S2 - 51 may be replaced with a mean value $Savg$ of multiple finger-image area differences, for example, $Savg = \frac{[(S2-S1)+(S3-S2)]}{2}$ , which can reduce a computational problem caused by nonuniform movement of a finger when the first images are captured.

After obtaining a mapping image area, a position of the mapping image on the display screen is determined. As illustrated in FIG. ID, a distance between the target object and each of multiple receivers is determined according to multiple signal detecting distances, a position of the target object is further determined, and then a position fl of the target object vertically mapped on the display screen of the electronic device is taken as a position of the mapping image.

It can be seen that, in the implementations of the present disclosure, by obtaining finger-image area changes corresponding to the multiple images contained in the first image, and distance changes between the target object and the electronic device when the multiple images are shot, the mapping image area corresponding to finger image areas is determined, which can overcome a problem of different sizes of the captured target object caused by different distances, and improve accuracy of an obtained mapping image.

Optionally, according to the multiple images contained in the first image, the mapping image area corresponding to the finger images can be determined, and the position of the mapping image can also be determined. A specific process includes the following. A target feature point in the first image is obtained. Time series of the target feature point in the multiple images in the first image is determined by conducting optical flow tracking on the target feature point. According to the time series, a moving track of the target feature point is generated. According to the moving track, a mapping point on the display screen corresponding to the target feature point is determined, and the mapping image is determined according to the mapping point.

By selecting one or more target feature points in the first image, and then tracking positions of these target feature points in each of the multiple images in the first image according to an optical flow tracking method, time series, in other words, existing moving track, of multiple target feature points are obtained. Then, positions of the multiple target feature points when they fall on the display screen are predicted according to the existing moving tracks, and the mapping image of the whole finger image on the display screen is further perfected, according to relative positions of the target feature points in the finger image.

In addition, when finger image recognition is conducted on the first image, if the finger image is not recognized, it may mean that the user's finger image cannot be collected at the first preset distance, therefore, images may be captured at a preset time interval, for example, images are captured every 5 ms, until the finger image is recognized in a captured image. When the finger image is recognized, a shooting distance between the target object and the electronic device is recorded, and the shooting distance is taken as the first preset distance to conduct image capture on a new target object next time.

104, a second component set of the ultrasonic module corresponding to the mapping image is waken up, wherein the second component set includes M emitters and N receivers, and M and N are positive integers.

The second component set is a partial region of the ultrasonic module located under the mapping image, and is usually in a dormant state. The second component is waken up only when the user's finger is determined to fall on the mapping image. M emitters and N receivers included in the second component set can collect fingerprint images for fingerprint recognition. The second component set may coincide with the first component set, or may not coincide with the first component set. Coincidence means that emitters and receivers in the first component set can be used not only to determine the mapping image, but also to collect fingerprint images and conduct the fingerprint recognition.

Optionally, at 103, a fingerprint collecting region of the ultrasonic module is a partial or entire touch region of the display screen, the fingerprint collecting region has A fingerprint pre-collecting partitions, where A is an integer greater than 1. In terms of waking up the second component set of the ultrasonic module, the following operations may be included.

A1, B fingerprint pre-collecting partitions corresponding to the mapping image are determined, where the B fingerprint pre-collecting partitions are part of the A fingerprint pre-collecting partitions, and B is an integer and $1<B<A$.

A2, a proportion of a mapping region image relative to each of the B fingerprint pre-collecting partitions is obtained, where B mapping region images collectively form the mapping image.

A3, whether the proportion of the mapping region image is greater than a first preset proportion is determined.

A4, a first fingerprint pre-collecting partition of which the proportion of the mapping region image is greater than the first preset proportion is obtained, and M emitters and N receivers corresponding to the first fingerprint pre-collecting partition are waken up as the second component set.

Reference can be made to FIG. IE, which is a schematic view illustrating obtainment of a second component set provided in implementations of the present disclosure. As illustrated in FIG. IE, the display screen of the electronic device includes multiple fingerprint pre-collecting partitions, and ultrasonic emitters and ultrasonic receivers under each fingerprint pre-collecting partition form an ultrasonic module. The fingerprint pre-collecting partitions on which the mapping image are mapped include m1, m2, m3, and m4. Assuming that the first preset proportion is 60%, therefore, ultrasonic emitters and ultrasonic receivers disposed under three fingerprint pre-collecting partitions m1, m2, and m3 are waken up, while ultrasonic emitters and ultrasonic receivers disposed under m4 do not need to be waken up due to a proportion of a mapping region image on m4 being less than 60%.

Optionally, after determining whether the proportion of the mapping region image relative to each of the B fingerprint pre-collecting partitions is greater than the first preset proportion at 103, the following operations may also be included.

B1, a second fingerprint pre-collecting partition of which the proportion of the mapping region image is not greater than the first preset proportion is obtained, and a target mapping image corresponding to the second fingerprint pre-collecting partition is obtained.

B2, a center of the mapping image is used as a symmetrical center, and centrosymmetric transformation is conducted on the target mapping image to obtain a symmetrical mapping image.

B3, a new mapping image is formed according to the symmetrical mapping image and the mapping image.

B4, a second component set of the ultrasonic module corresponding to the new mapping image is waken up.

Specifically, if the number of fingerprint pre-collecting partitions, where proportions of mapping region images are not greater than the first preset proportion, are greater than 1, these fingerprint pre-collecting regions can be spliced to form a fingerprint pre-collecting partition, of which the proportion of the mapping region image may be greater than the first preset proportion. Therefore, the fingerprint pre-collecting partition, of which the proportion of the mapping region image is not greater than the first preset proportion, is taken as the second fingerprint pre-collecting partition, the mapping image in the second fingerprint pre-collecting partition is obtained as the target mapping image, and then the center of the mapping image is obtained. An intersection of a transverse midline and a longitudinal midline of the mapping image can be taken as the center, the centrosymmetric transformation is conducted by taking the center as the symmetrical center, so as to obtain the symmetrical mapping image corresponding to the target mapping image in the second fingerprint pre-collecting partition. Then a (part of) mapping image without the centrosymmetric transformation is combined with the target mapping image to form a new mapping image, and the first fingerprint pre-collecting partition is determined according to the new mapping image to wake up the second component set.

In addition, when the centrosymmetric transformation is conducted, symmetric transformation can only be conducted on one side of two centrosymmetric sides, while the other side remains unchanged. For example, if the centrosymmetric transformation is conducted from left to right, the symmetric transformation cannot be conducted from right to left simultaneously, which avoids interchange of the mapping image on the centrosymmetric two sides and avoids failing to splice the mapping image.

It can be seen that, in the implementations of the present disclosure, by determining multiple fingerprint pre-collecting partitions on which the mapping image is mapped, taking the fingerprint pre-collecting partition, of which the proportion of the mapping region image is greater than the first preset proportion, as the first fingerprint pre-collecting partition, and waking up the emitters and the receivers corresponding to the first fingerprint pre-collecting partition as the second component set, a part of the ultrasonic module in a region where the user's finger presses can be accurately launched, and excess energy consumption can be effectively reduced. At the same time, for a second fingerprint pre-collecting partition of which the proportion of the mapping region image is less than the first preset proportion, the centrosymmetric transformation can be conducted on the mapping image corresponding to the second fingerprint pre-collecting partition, such that a transformed symmetric mapping image and a part of an original mapping image without the centrosymmetric transformation can form the new mapping image, thereby obtaining a new first fingerprint pre-collecting partition, which can further improve accuracy of waking up the second component set.

105, the second component set of the ultrasonic module is controlled to collect the fingerprints to obtain the target fingerprint image.

After waking up the second component set, because the second component set is a part of the ultrasonic module under the mapping image, and the mapping image is a predicted image region where the user's finger is most likely to fall on, the second component set can accurately collect the fingerprints of the user touching the display screen to obtain the target fingerprint image. The processing circuit can recognize the target fingerprint image, that is, fingerprint recognition process can be completed.

Optionally, between 104 and 105, the following operations may also be included.

Color conversion is conducted on components in the second component set and fingerprint pre-collecting partitions corresponding to the second component set, to prompt the user to put the finger on the fingerprint pre-collecting partitions corresponding to the second component set, and an operation of controlling the second component set of the ultrasonic module to collect the fingerprints is proceeded, to obtain the target fingerprint image.

In specific implementations, in order to prompt the user to put the finger on the fingerprint pre-collecting partition corresponding to the second component set, the color conversion can be conducted on the components in the second component set and the fingerprint pre-collection partitions corresponding to the second component set. For example, color deepening conversion, color brightening conversion, or conversion from a solid color to colors, etc. are conducted for a corresponding display region.

It can be seen that, a fingerprint collecting method is provided in the implementations of the present disclosure and applicable to the electronic device. The electronic device includes a processing circuit, and an ultrasonic module and a display screen which are connected with the processing circuit. The distance between a target object and the electronic device is obtained by the processing circuit. A first image of the target object is captured through a first component set of the ultrasonic module, upon determining that the distance between the target object and electronic device is less than the first preset distance. The finger image recognition is conducted on the first image by the processing circuit, the mapping image corresponding to the finger image is determined by the processing circuit upon recognizing that the first image contains the finger image, and a second component set of the ultrasonic module corresponding to the mapping image is waken up. The second component set of the ultrasonic module is controlled by the ultrasonic module to collect the fingerprints to obtain the target fingerprint image. This process makes a region for collecting the fingerprints accurately match the mapping image on the display screen corresponding to the finger, such that accuracy of collecting fingerprint image is improved, while excess energy consumption is reduced during fingerprint collection.

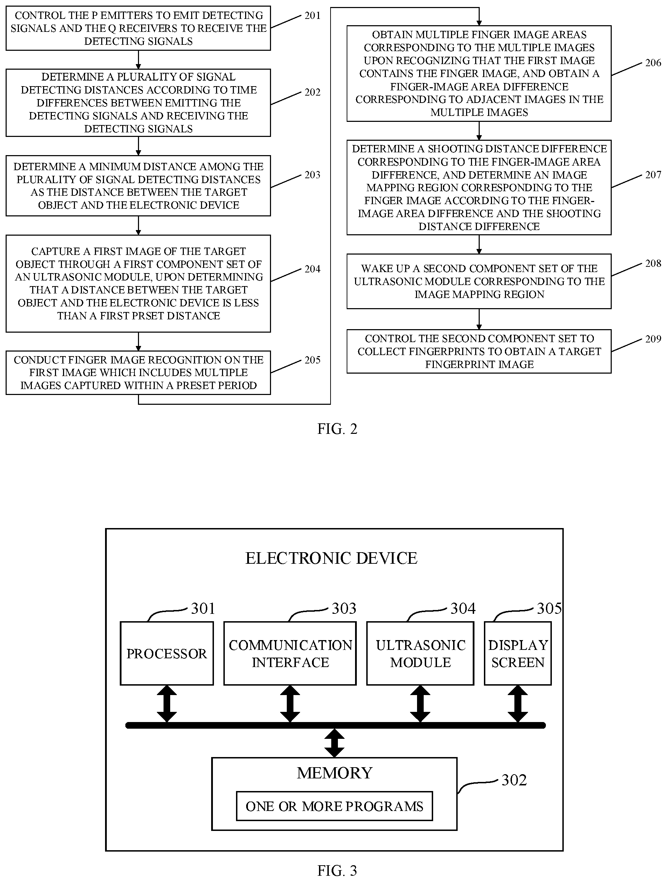

Reference can be made to FIG. 2, which is a schematic flowchart illustrating another fingerprint collecting method provided in implementations of the present disclosure. As illustrated in FIG. 2, the fingerprint collecting method includes the following operations.

201, P emitters are controlled to emit detecting signals and Q receivers are controlled to receive the detecting signals.

202, multiple signal detecting distances are determined according to time differences between emitting the detecting signals and receiving the detecting signals.

203, a minimum distance among the multiple signal detecting distance is determined as the distance between a target object and an electronic device.

204, a first image of the target object is captured through a first component set of an ultrasonic module, upon determining that a distance between the target object and the electronic device is less than a first preset distance.

205, finger image recognition is conducted on the first image which includes multiple images captured within a preset period.

206, multiple finger image areas corresponding to the multiple images are obtained upon recognizing that the first image contains the finger image, and a finger-image area difference corresponding to adjacent finger images in the multiple finger images is obtained.

207, a shooting distance difference corresponding to the finger-image area difference is determined, and a mapping image corresponding to the finger image is determined according to the finger-image area difference and the shooting distance difference.

208, a second component set of the ultrasonic module corresponding to the mapping image is waken up, wherein the second component set includes M emitters and N receivers, and M and N are positive integers.

209, the second component set is controlled to collect fingerprints to obtain a target fingerprint image.

The specific description of 201 to 209 can refer to the corresponding description of the fingerprint collecting method described at 101 to 105, which will not be repeated here.

In the implementations of the present disclosure, the time differences between emitting the detecting signals and receiving the detecting signals in the first component set determine the distance between the target object and the electronic device, which can improve real-time and accuracy of a detection result. When the distance between the target object and the electronic device is determined to be less than the first preset distance, the first image of the target object is captured through the first component set, then the mapping image corresponding to the finger image and on the display screen of the electronic device is determined, according to changes of the finger image areas in the first image and changes of the distances between the target object and the electronic device, which can improve accuracy of mapping image obtainment, thereby improving accuracy of subsequent fingerprint image collection by waking up the second component set according to the mapping image, while reducing unnecessary energy consumption.

Similar to the above implementations, reference can be made to FIG. 3, which is a schematic structural view illustrating an electronic device provided in implementations of the present disclosure. As illustrated in FIG. 3, the electronic device includes a processor 301, a memory 302, a communication interface 303, an ultrasonic module 304, a display screen 305, and one or more programs. The one or more programs are stored in the memory 302, are configured to be executed by the processor, and include instructions for performing the following operations.

A distance between a target object and the electronic device is obtained. A first image of the target object is captured through a first component set of an ultrasonic module, upon determining that the distance between the target object and the electronic device is less than a first preset distance. The first component set includes P emitters and Q receivers, where P and Q are positive integers. Finger image recognition is conducted on the first image, and upon recognizing that the first image contains the finger image, a mapping image on the display screen corresponding to a finger image is determined. A second component set of the ultrasonic module corresponding to the mapping image is waken up, wherein the second component set includes M emitters and N receivers, and M and N are positive integers. The second component set of the ultrasonic module is controlled to collect fingerprints to obtain a target fingerprint image.

It can be seen that, in the implementations of the present disclosure, the electronic device includes a processing circuit, and an ultrasonic module and a display screen which are connected with the processing circuit. The distance between the target object and the electronic device is obtained by the processing circuit. The first image of the target object is captured through the first component set of the ultrasonic module, upon determining that the distance between the target object and electronic device is less than the first preset distance. The finger image recognition is conducted on the first image by the processing circuit, the mapping image corresponding to the finger image is determined by the processing circuit upon recognizing that the first image contains the finger image, and the second component set of the ultrasonic module corresponding to the mapping image is waken up. The second component set of the ultrasonic module is controlled by the ultrasonic module to collect the fingerprints to obtain the target fingerprint image. This process makes a region for collecting the fingerprints accurately match the mapping image on the display screen corresponding to the finger, such that accuracy of collecting fingerprint image is improved, while excess energy consumption is reduced during fingerprint collection.

In a possible example, in terms of obtaining the distance between the target object and the electronic device, the aforementioned programs further include instructions for performing the following operations.

The first component set is controlled to be in an on state, to make P emitters emit detecting signals and Q receivers receive the detecting signals. Multiple signal detecting distances are determined according to time differences between emitting the detecting signals and receiving the detecting signals. A minimum distance among the multiple signal detecting distances is determined as the distance between the target object and the electronic device.

In a possible example, the first image includes multiple images captured within a preset period. In terms of determining the mapping image on the display screen corresponding to the finger image, the aforementioned programs further include instructions for performing the following operations.

Multiple finger image areas corresponding to the multiple images are obtained, and a finger-image area difference corresponding to adjacent images in the multiple images is determined, according to the multiple finger image areas. A shooting distance difference corresponding to the finger-image area difference is determined. The mapping image corresponding to the finger image is determined, according to the finger-image area difference and the shooting distance difference.

In a possible example, a fingerprint collecting region of the ultrasonic module is a partial or entire touch region of the display screen; the fingerprint collecting region has A fingerprint pre-collecting partitions, where A is an integer greater than 1. In terms of waking up the second component set of the ultrasonic module corresponding to the mapping image, instructions in the programs are used for performing the following operations.

B fingerprint pre-collecting partitions corresponding to the mapping image are determined, the B fingerprint pre-collecting partitions are part of the A fingerprint pre-collecting partitions, and B is an integer and 1<B<A. A proportion of a mapping region image relative to each of the B fingerprint pre-collecting partitions, and B mapping region images form the mapping image. A proportion of a mapping region image relative to each of the B fingerprint pre-collecting partitions is obtained, and B mapping region images form the mapping image. Whether the proportion of the mapping region is greater than a first preset proportion is determined. A first fingerprint pre-collecting partition of which the proportion of the mapping region image is greater than the first preset proportion is obtained, and M emitters and N receivers corresponding to the first fingerprint pre-collecting partition are waken up and serve as the second component set.

In a possible example, the aforementioned programs further include instructions for performing the following operations after determining whether the proportion of the mapping region image relative to each of the B fingerprint pre-collecting partitions is greater than a first preset proportion.

A second fingerprint pre-collecting partition of which the proportion of the mapping region image is not greater than the first preset proportion is obtained, and a target mapping image corresponding to the second fingerprint pre-collecting partition is obtained. A center of the mapping image is used as a symmetrical center, and centrosymmetric transformation is conducted on the target mapping image to obtain a symmetrical mapping image. A new mapping image is formed according to the symmetrical mapping image and the mapping image. The second component set of the ultrasonic module corresponding to the new mapping image is waken up.

In a possible example, the programs further include instructions for performing the following operations.

Color conversion is conducted on components in the second component set and fingerprint pre-collecting partitions corresponding to the second component set, to prompt the user to put the finger on the fingerprint pre-collecting partitions corresponding to the second component set, and an operation of controlling the second component set to collect the fingerprints is proceeded to obtain the target fingerprint image.

The above mainly introduces solutions in the implementations of the present disclosure from a perspective of an implementation process at the method side. It can be understood that, in order to realize the above functions, the electronic device includes corresponding hardware structures and/or software modules for performing various functions. Those skilled in the art should readily realize that, combined with units and algorithmic operations of various examples described in the implementations provided in the present disclosure, the present disclosure can be realized by hardware or a combination of hardware and computer software. Whether a function is implemented by means of hardware or computer software driving hardware, depends on a particular application and a design constraint of a technical solution. Those skilled in the art may use different methods for each particular application to implement a described function, but such implementations should not be regarded as exceeding the scope of the present disclosure.

The implementations of the present disclosure may divide functional units of the electronic device according to the above method examples. For example, each functional unit may be divided according to each function, or two or more functions may be integrated into one processing unit. The above integrated unit can be implemented by means of hardware or software functional units. It should be noted that, the division of units in the implementations of the present disclosure is illustrative and only a division of logical functions, and there may exist other division manners in practice.

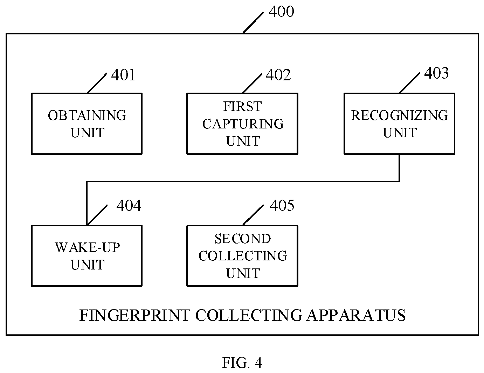

FIG. 4 is a block view referring to functional units of a fingerprint collecting apparatus 400 provided in implementations of the present disclosure. The fingerprint collecting apparatus 400 is applicable to an electronic device and includes an obtaining unit 401, a first capturing unit 402, a recognizing unit 403, a waking up unit 404, and a second collecting unit 405. The obtaining unit 401 is configured to obtain a distance between a target object and the electronic device through a processing circuit. The first capturing unit 402 is configured to capture a first image of the target object through a first component set of an ultrasonic module, upon determining that the distance between the target object and the electronic device is less than a first preset distance, the first component set including P emitters and Q receivers, where P and Q are positive integers. The recognizing unit 403 is configured to conduct finger image recognition on the first image through the processing circuit, and determine a mapping image on the display screen corresponding to a finger image upon recognizing that the first image contains the finger image. The waking up unit 404 is configured to wake up a second component set of the ultrasonic module corresponding to the mapping image, the second component set including M emitters and N receivers, where M and N are positive integers. The second collecting unit 405 is configured to control the second component set of the ultrasonic module to collect fingerprints through the ultrasonic module to obtain a target fingerprint image.

It can be seen that, in the implementations of the present disclosure, a fingerprint collecting apparatus is applicable to the electronic device. The electronic device includes the processing circuit, and the ultrasonic module and the display screen which are connected with the processing circuit. In the fingerprint collecting apparatus, the processing circuit is configured to obtain the distance between the target object and the electronic device. The first component set of the ultrasonic module is configured to capture the first image of the target object, upon determining that the distance between the target object and electronic device is less than the first preset distance. The processing circuit is configured to conduct finger image recognition on the first image, determine the mapping image corresponding to the finger image upon recognizing that the first image contains the finger image, and wake up the second component set of the ultrasonic module corresponding to the mapping image. The ultrasonic module is configured to control the second component set of the ultrasonic module to collect the fingerprints to obtain the target fingerprint image. This process makes a region for collecting the fingerprints accurately match the mapping image of the finger on the display screen, such that accuracy of collecting fingerprint image is improved, while excess energy consumption is reduced during fingerprint collection.

In a possible example, the obtaining unit 401 is specifically configured to control P emitters to emit detecting signals and Q receivers to receive the detecting signals, determine multiple signal detecting distances according to time differences between emitting the detecting signals and receiving the detecting signals, and determine a minimum distance among the multiple signal detecting distances as the distance between the target object and the electronic device.

In a possible example, the first image includes multiple images captured within a preset period. In terms of determining the mapping image of the finger image on the display screen, the recognizing unit 403 is specifically configured to obtain multiple finger image areas corresponding to the multiple images, determine a finger-image difference corresponding to adjacent images in the multiple images, determine a shooting distance corresponding to the finger-image area difference, and determine the mapping image corresponding to the finger image according to the finger-image area difference and the shooting distance difference.

In a possible example, a fingerprint collecting region of the ultrasonic module is a partial or entire touch region of the display screen, the fingerprint collecting region having A fingerprint pre-collecting partitions, where A is an integer greater than 1. The waking up unit 404 is specifically configured to determine B fingerprint pre-collecting partitions corresponding to the mapping image, the B fingerprint pre-collecting partitions being part of the A fingerprint pre-collecting partitions, where B is an integer and 1<B<A; obtain a proportion of a mapping region image relative to each of the B fingerprint pre-collecting partitions, B mapping region images collectively forming the mapping image; determine whether the proportion of the mapping region image is greater than a first preset proportion; obtain a first fingerprint pre-collecting partition of which the proportion of the mapping region image is greater than the first preset proportion, and wake up M emitters and N receivers corresponding to the first fingerprint pre-collecting partition as the second component set.

In a possible example, the waking up unit 404 is further configured to obtain a second fingerprint pre-collecting partition of which the proportion of the mapping region image is not greater than the first preset proportion after determining whether the proportion of the mapping region image relative to each of the B fingerprint pre-collecting partitions is greater than a first preset proportion, and a target mapping image corresponding to the second fingerprint pre-collecting partition; use a center of the mapping image as a symmetrical center, and conduct centrosymmetric transformation on the target mapping image to obtain a symmetrical mapping image; form a new mapping image according to the symmetrical mapping image and the mapping image; wake up the second component set of the ultrasonic module corresponding to the new mapping image.

In a possible example, the fingerprint collecting apparatus 400 is further configured to conduct color conversion on components in the second component set and fingerprint pre-collecting partitions corresponding to the second component set, to prompt a user to put a finger on the fingerprint pre-collecting partitions corresponding to the second component set, so that the ultrasonic module control the second component set of the ultrasonic module to collect the fingerprints to obtain the target fingerprint image.

A computer storage medium is also provided in implementations of the present disclosure, and is configured to store computer programs for electronic data interchange. The computer programs are operable with a computer to perform any of methods' some or all operations described in the above method implementations.

A computer program product is also provided in implementations of the present disclosure, including a non-transitory computer readable medium configured to store computer programs which, when executed, are operable with a computer to perform any of methods' some or all operations described in the above method implementations.

It should be noted that, for the sake of simplicity, the above method implementations are described as a series of action combinations. However, it will be appreciated by those skilled in the art that implementations are not limited by the sequence of actions described. According to implementations, some steps or operations may be performed in other orders or simultaneously. Besides, it will be appreciated by those skilled in the art that the implementations described in the specification are exemplary implementations, and the actions and modules involved are not necessarily essential to the disclosure.

In the above implementations, the description of each implementation has its own emphasis. For the parts not described in detail in one implementation, reference may be made to related description in other implementations.

It will be appreciated that the apparatuses disclosed in implementations herein may also be implemented in various other manners. For example, the above apparatus implementations are merely illustrative, e.g., the division of units is only a division of logical functions, and there may exist other manners of division in practice, e.g., multiple units or assemblies may be combined or may be integrated into other system, or some features may be ignored or skipped. In other respects, the coupling or direct coupling or communication connection as illustrated or discussed may be an indirect coupling or communication connection through some interfaces, apparatus or units, and may be electrical or other forms.

Separated units as illustrated may or may not be physically separated. Components or parts displayed as units may or may not be physical units, and may reside at one location or may be distributed to multiple network units. Some or all of the units may be selectively adopted according to practical needs to achieve desired objectives of implementations.

In addition, various functional units described in implementations herein may be integrated into one processing unit or may be present as a number of physically separated units, and two or more units may be integrated into one. The integrated unit may take the form of hardware or a software functional unit.

If the integrated units are implemented as software functional units and sold or used as standalone products, they may be stored in a computer-readable memory. Based on such an understanding, the essential technical solution, or the portion that contributes to the related art, or all or part of the technical solution of the disclosure may be embodied as software products. The computer software products can be stored in a memory and may include multiple instructions that, when executed, can cause a computing device (e.g., a personal computer, a server, a network device, etc.) to execute all or some operations of the methods described in various implementations. The above memory may include various kinds of media that can store program codes, such as a universal serial bus (USB) flash disk, a read-only memory (ROM), a random access memory (RAM), a mobile hard disk, a magnetic disk, or an optical disk.

Those skilled in the art should understand that, some or all operations of various methods in the above implementations can be implemented by instructing related hardware through programs. The programs can be stored in a computer-readable memory which may include a flash disk, the ROM, the RAM, the magnetic disk, or the optical disk.

The above implementations in this disclosure are introduced in detail. Principles and implementation manners are elaborated with specific implementations herein. The above illustration of implementations is only used to help understand methods and core ideas of the present disclosure. At the same time, for those skilled in the art, according to ideas of the present disclosure, there will be changes in specific implementation manners and application scope. In summary, contents of this specification should not be understood as limitation on the present disclosure.

## Claims

1. An electronic device, comprising:

   a processing circuit configured to obtain a distance between a target object and the electronic device;
   a display screen connected with the processing circuit; and
   a plurality of ultrasonic modules connected with the processing circuit, and configured to capture a first image of the target object through a first component set of the plurality of ultrasonic modules, upon determining that the distance between the target object and the electronic device is less than a first preset distance, wherein the first component set comprises P emitters and Q receivers, and P and Q are positive integers;
   the processing circuit being further configured to conduct finger image recognition on the first image, determine a mapping image on the display screen corresponding to a finger image upon recognizing that the first image contains the finger image, and wake up a second component set of the plurality of ultrasonic modules corresponding to the mapping image, wherein the second component set comprises M emitters and N receivers, and M and N are positive integers; and
the plurality of ultrasonic modules being further configured to control the second component set of the plurality of ultrasonic modules to collect fingerprints to obtain a target fingerprint image.

2. The electronic device of claim 1, wherein the processing circuit configured to obtain the distance between the target object and the electronic device is specifically configured to:

control the P emitters to emit detecting signals and the Q receivers to receive the detecting signals;
determine a plurality of signal detecting distances according to time differences between emitting the detecting signals and receiving the detecting signals; and
determine a minimum distance among the plurality of signal detecting distances as the distance between the target object and the electronic device.

3. The electronic device of claim 1 or 2, wherein the first image includes a plurality of images captured within a preset period, and the processing circuit configured to determine the mapping image on the display screen corresponding to the finger image is specifically configured to:

obtain a plurality of finger image areas corresponding to the plurality of images, and determine, according to the plurality of finger image areas, a finger-image area difference corresponding to adjacent images in the plurality of images;
determine a shooting distance difference corresponding to the finger-image area difference; and
determine the mapping image corresponding to the finger image, according to the finger-image area difference and the shooting distance difference.

4. The electronic device of claim 1, wherein a fingerprint collecting region of the plurality of ultrasonic modules is a partial or entire touch region of the display screen, the fingerprint collecting region having A fingerprint pre-collecting partitions, wherein A is an integer greater than 1;
the processing circuit configured to wake up the second component set of the plurality of ultrasonic modules corresponding to the mapping image is configured to:

determine B fingerprint pre-collecting partitions corresponding to the mapping image, wherein the B fingerprint pre-collecting partitions are part of the A fingerprint pre-collecting partitions, and B is an integer and 1<B<A;
obtain a proportion of a mapping region image relative to each of the B fingerprint pre-collecting partitions, the B mapping region images collectively forming the mapping image;
determine whether the proportion of the mapping region image is greater than a first preset proportion; and
obtain a first fingerprint pre-collecting partition of which the proportion of the mapping region image is greater than the first preset proportion, and wake up the M emitters and the N receivers corresponding to the first fingerprint pre-collecting partition as the second component set.

5. The electronic device of claim 4, wherein the processing circuit is further configured to:
after determining whether the proportion of the mapping region image relative to each of the B fingerprint pre-collecting partitions is greater than the first preset proportion,

obtain a second fingerprint pre-collecting partition of which the proportion of the mapping region image is not greater than the first preset proportion, and a target mapping image corresponding to the second fingerprint pre-collecting partition;
use a center of the mapping image as a symmetrical center, and conduct centrosymmetric transformation on the target mapping image to obtain a symmetrical mapping image;
form a new mapping image according to the symmetrical mapping image and the mapping image; and
wake up the second component set of the plurality of ultrasonic modules corresponding to the new mapping image.

6. The electronic device of any of claims 1 to 5, wherein the processing circuit is further configured to:
conduct color conversion on components in the second component set and fingerprint pre-collecting partitions corresponding to the second component set, to prompt a user to put a finger on the fingerprint pre-collecting partitions corresponding to the second component set, so that the plurality of ultrasonic modules control the second component set of the plurality of ultrasonic modules to collect the fingerprints to obtain the target fingerprint image.

7. A fingerprint collecting method, applicable to an electronic device, the method comprising:

obtaining a distance between a target object and the electronic device;
capturing a first image of the target object through a first component set of an ultrasonic module, upon determining that the distance between the target object and the electronic device is less than a first preset distance, wherein the first component set comprises P emitters and Q receivers, and P and Q are positive integers;
conducting finger image recognition on the first image, and determining a mapping image on a display screen corresponding to a finger image upon recognizing that the first image contains the finger image;
waking up a second component set of the ultrasonic module corresponding to the mapping image, wherein the second component set comprises M emitters and N receivers, and M and N are positive integers; and
controlling the second component set of the ultrasonic module to collect fingerprints to obtain a target fingerprint image.

8. The method of claim 7, wherein obtaining the distance between the target object and the electronic device comprises:

controlling the P emitters to emit detecting signals and the Q receivers to receive the detecting signals;
determining a plurality of signal detecting distances according to time differences between emitting the detecting signals and receiving the detecting signals; and
determining a minimum distance among the plurality of signal detecting distances as the distance between the target object and the electronic device.

9. The method of claim 7 or 8, wherein the first image includes a plurality of images captured within a preset period, and determining the mapping image on the display screen corresponding to the finger image comprises:

obtaining a plurality of finger image areas corresponding to the plurality of images, and determining, according to the plurality of finger image areas, a finger-image area difference corresponding to adjacent images in the plurality of images;
determining a shooting distance difference corresponding to the finger-image area difference; and
determining the mapping image corresponding to the finger image, according to the finger-image area difference and the shooting distance difference.

10. The method of claim 7, wherein a fingerprint collecting region of the ultrasonic module is a partial or entire touch region of the display screen, wherein the fingerprint collecting region has A fingerprint pre-collecting partitions, and A is an integer greater than 1;
waking up the second component set of the ultrasonic module corresponding to the mapping image comprises:

determining B fingerprint pre-collecting partitions corresponding to the mapping image, wherein the B fingerprint pre-collecting partitions are part of the A fingerprint pre-collecting partitions, and B is an integer and $1<B<A$;
obtaining a proportion of a mapping region image relative to each of the B fingerprint pre-collecting partitions, the B mapping region images collectively forming the mapping image;
determining whether the proportion of the mapping region image is greater than a first preset proportion; and
obtaining a first fingerprint pre-collecting partition of which the proportion of the mapping region image is greater than the first preset proportion, and waking up the M emitters and the N receivers corresponding to the first fingerprint pre-collecting partition as the second component set.

11. The method of claim 10, further comprising:
after determining whether the proportion of the mapping region image relative to each of the B fingerprint pre-collecting partitions is greater than the first preset proportion,

obtaining a second fingerprint pre-collecting partition of which the proportion of the mapping region image is not greater than the first preset proportion, and a target mapping image corresponding to the second fingerprint pre-collecting partition;
using a center of the mapping image as a symmetrical center, and conducting centrosymmetric transformation on the target mapping image to obtain a symmetrical mapping image;
forming a new mapping image according to the symmetrical mapping image and the mapping image; and
waking up the second component set of the ultrasonic module corresponding to the new mapping image.

12. The method of any of claims 7 to 11, further comprising:

conducting color conversion on components in the second component set and fingerprint pre-collecting partitions corresponding to the second component set, to prompt a user to put a finger on the fingerprint pre-collecting partitions corresponding to the second component set; and

controlling the second component set of the ultrasonic module to collect the fingerprints, to obtain the target fingerprint image.

13. A fingerprint collecting apparatus, applicable to an electronic device, the apparatus comprising:

an obtaining unit configured to obtain a distance between a target object and the electronic device;

a first capturing unit configured to capture a first image of the target object through a first component set of an ultrasonic module, upon determining that the distance between the target object and the electronic device is less than a first preset distance, wherein the first component set comprises P emitters and Q receivers, and P and Q are positive integers;

a recognizing unit configured to conduct finger image recognition on the first image, and determine a mapping image on the display screen corresponding to a finger image upon recognizing that the first image contains the finger image;

a waking up unit configured to wake up a second component set of the ultrasonic module corresponding to the mapping image, wherein the second component set comprises M emitters and N receivers, and M and N are positive integers; and

a second collecting unit configured to control the second component set of the ultrasonic module to collect fingerprints to obtain a target fingerprint image.

14. The apparatus of claim 13, wherein the obtaining unit configured to obtain the distance between the target object and the electronic device is specifically configured to:

control the P emitters to emit detecting signals and the Q receivers to receive the detecting signals;

determine a plurality of signal detecting distances according to time differences between emitting the detecting signals and receiving the detecting signals; and

determine a minimum distance among the plurality of signal detecting distances as the distance between the target object and the electronic device.

15. The apparatus of claim 13 or 14, wherein the first image includes a plurality of images captured within a preset period, and the recognizing unit configured to determine the mapping image on the display screen corresponding to the finger image is specifically configured to:

obtain a plurality of finger image areas corresponding to the plurality of images, and determine, according to the plurality of finger image areas, a finger-image area difference corresponding to adjacent images in the plurality of images;

determine a shooting distance difference corresponding to the finger-image area difference; and

determine the mapping image corresponding to the finger image, according to the finger-image area difference and the shooting distance difference.

16. The apparatus of claim 13, wherein a fingerprint collecting region of the ultrasonic module is a partial or entire touch region of the display screen, the fingerprint collecting region having A fingerprint pre-collecting partitions, where A is an integer greater than 1;

the waking up unit configured to wake up the second component set of the ultrasonic module corresponding to the mapping image is specifically configured to:

determine B fingerprint pre-collecting partitions corresponding to the mapping image, wherein the B fingerprint pre-collecting partitions are part of the A fingerprint pre-collecting partitions, and B is an integer and $1 \leq B < A$;

obtain a proportion of a mapping region image relative to each of the B fingerprint pre-collecting partitions, the B mapping region images collectively forming the mapping image;

determine whether the proportion of the mapping region image is greater than a first preset proportion; and

obtain a first fingerprint pre-collecting partition of which the proportion of the mapping region image is greater than the first preset proportion, and wake up the M emitters and the N receivers corresponding to the first fingerprint pre-collecting partition as the second component set.

17. The apparatus of claim 16, wherein the waking up unit is further configured to:

after determining whether the proportion of the mapping region image relative to each of the B fingerprint pre-collecting partitions is greater than the first preset proportion,

obtain a second fingerprint pre-collecting partition of which the proportion of the mapping region image is not greater than the first preset proportion, and a target mapping image corresponding to the second fingerprint pre-collecting partition;

use a center of the mapping image as a symmetrical center, and conduct centrosymmetric transformation on the target mapping image to obtain a symmetrical mapping image;

form a new mapping image according to the symmetrical mapping image and the mapping image; and

wake up the second component set of the ultrasonic module corresponding to the new mapping image.

18. An electronic apparatus, comprising a processor, a memory, a communication interface, and one or more programs, wherein the one or more programs are stored in the memory and are configured to be executed by the processor, and comprise instructions for performing the method of any of claims 7 to 12.

19. A computer-readable storage medium configured to store computer programs for electronic data interchange, wherein the computer programs are operable with a computer to perform the method of any of claims 7 to 12.

20. A computer program product, comprising a non-transitory computer readable medium configured to store computer programs which, when executed, are operable with a computer to perform the method of any of claims 7 to 12.

100

ELECTRONIC DEVICE

STORING AND
PROCESSING CIRCUIT — 110

INPUT-OUTPUT CIRCUIT — 150
— 170

SENSOR

TOUCH DISPLAY
SCREEN — 130

AUDIO ASSEMBLY — 140

COMMUNICATION
CIRCUIT — 120

INPUT-OUTPUT UNIT — 160

FIG. 1A

100

210
220
230
240
250
260
270
280

FIG. 1B

OBTAIN A DISTANCE BETWEEN A TARGET OBJECT AND AN ELECTRONIC DEVICE ⟋101

CAPTURE A FIRST IMAGE OF THE TARGET OBJECT THROUGH A FIRST COMPONENT SET OF THE ULTRASONIC MODULE, UPON DETERMINING THAT THE DISTANCE BETWEEN THE TARGET OBJECT AND THE ELECTRONIC DEVICE IS LESS THAN A FIRST PRESET DISTANCE ⟋102

CONDUCT FINGER IMAGE RECOGNITION ON THE FIRST IMAGE, AND DETERMINE AN IMAGE MAPPING REGION CORRESPONDING TO A FINGER IMAGE AND ON THE DISPLAY SCREEN, UPON RECOGNIZING THAT THE FIRST IMAGE CONTAINS THE FINGER IMAGE ⟋103

WAKE UP A SECOND COMPONENT SET OF THE ULTRASONIC MODULE CORRESPONDING TO THE MAPPING IMAGE ⟋104

CONTROL THE SECOND COMPONENT SET OF THE ULTRASONIC MODULE TO COLLECT FINGERPRINTS TO OBTAIN A TARGET FINGERPRINT IMAGE ⟋105

FIG. 1C

SIGNAL 3

SIGNAL 1

SIGNAL 2

f1

C1

C2

C3

FIG. 1D

m1

m2

m3

m4

FIG. 1E

CONTROL THE P EMITTERS TO EMIT DETECTING SIGNALS AND THE Q RECEIVERS TO RECEIVE THE DETECTING SIGNALS — 201

DETERMINE A PLURALITY OF SIGNAL DETECTING DISTANCES ACCORDING TO TIME DIFFERENCES BETWEEN EMITTING THE DETECTING SIGNALS AND RECEIVING THE DETECTING SIGNALS — 202

DETERMINE A MINIMUM DISTANCE AMONG THE PLURALITY OF SIGNAL DETECTING DISTANCES AS THE DISTANCE BETWEEN THE TARGET OBJECT AND THE ELECTRONIC DEVICE — 203

CAPTURE A FIRST IMAGE OF THE TARGET OBJECT THROUGH A FIRST COMPONENT SET OF AN ULTRASONIC MODULE, UPON DETERMINING THAT A DISTANCE BETWEEN THE TARGET OBJECT AND THE ELECTRONIC DEVICE IS LESS THAN A FIRST PRSET DISTANCE — 204

CONDUCT FINGER IMAGE RECOGNITION ON THE FIRST IMAGE WHICH INCLUDES MULTIPLE IMAGES CAPTURED WITHIN A PRESET PERIOD — 205

OBTAIN MULTIPLE FINGER IMAGE AREAS CORRESPONDING TO THE MULTIPLE IMAGES UPON RECOGNIZING THAT THE FIRST IMAGE CONTAINS THE FINGER IMAGE, AND OBTAIN A FINGER-IMAGE AREA DIFFERENCE CORRESPONDING TO ADJACENT IMAGES IN THE MULTIPLE IMAGES — 206

DETERMINE A SHOOTING DISTANCE DIFFERENCE CORRESPONDING TO THE FINGER-IMAGE AREA DIFFERENCE, AND DETERMINE AN IMAGE MAPPING REGION CORRESPONDING TO THE FINGER IMAGE ACCORDING TO THE FINGER-IMAGE AREA DIFFERENCE AND THE SHOOTING DISTANCE DIFFERENCE — 207

WAKE UP A SECOND COMPONENT SET OF THE ULTRASONIC MODULE CORRESPONDING TO THE IMAGE MAPPING REGION — 208

CONTROL THE SECOND COMPONENT SET TO COLLECT FINGERPRINTS TO OBTAIN A TARGET FINGERPRINT IMAGE — 209

FIG. 2

ELECTRONIC DEVICE

PROCESSOR — 301

COMMUNICATION INTERFACE — 303

ULTRASONIC MODULE — 304

DISPLAY SCREEN — 305

MEMORY

ONE OR MORE PROGRAMS — 302

FIG. 3

400

401
OBTAINING UNIT

402
FIRST CAPTURING UNIT

403
RECOGNIZING UNIT

404
WAKE-UP UNIT

405
SECOND COLLECTING UNIT

FINGERPRINT COLLECTING APPARATUS

FIG. 4

## INTERNATIONAL SEARCH REPORT

| International application No. |
|---|
| **PCT/CN2020/101925** |

**A. CLASSIFICATION OF SUBJECT MATTER**

G06K 9/00(2006.01)i

According to International Patent Classification (IPC) or to both national classification and IPC

**B. FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNABS; CNTXT; CNKI; IEEE; VEN; USTXT; WOTXT; EPTXT: 指纹, 手指, 手, 录入, 采集, 目标, 图像, 预设, 距离, 超声波, finger, fingerprint, hand, acqui+, input, enter, realiz+, target, picture, pre+, distance, ultrasonic

**C. DOCUMENTS CONSIDERED TO BE RELEVANT**

| Category* | Citation of document, with indication, where appropriate, of the relevant passages | Relevant to claim No. |
|---|---|---|
| PX | CN 110414410 A (OPPO GUANGDONG MOBILE COMMUNICATIONS CO., LTD.) 05 November 2019 (2019-11-05)<br>description, paragraphs [0029]-[0194] | 1-20 |
| X | CN 109800731 A (OPPO GUANGDONG MOBILE COMMUNICATIONS CO., LTD.) 24 May 2019 (2019-05-24)<br>description, paragraphs [0024]-[0103], and figures 1-6 | 1, 2, 6-8, 12-14, 18-20 |
| A | CN 109800731 A (OPPO GUANGDONG MOBILE COMMUNICATIONS CO., LTD.) 24 May 2019 (2019-05-24)<br>description, paragraphs [0024]-[0103], and figures 1-6 | 3-5, 9-11, 15-17 |
| A | CN 105893982 A (LESHI HOLDING (BEIJING) CO. et al.) 24 August 2016 (2016-08-24)<br>entire document | 1-20 |
| A | CN 109711259 A (OPPO GUANGDONG MOBILE TELECOMMUNICATIONS CO., LTD.) 03 May 2019 (2019-05-03)<br>entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 September 2020** | **12 October 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/101925**

| Patent document cited in search report | | | Publication date (day/month/year) | Patent family member(s) | Publication date (day/month/year) |
|---|---|---|---|---|---|
| CN | 110414410 | A | 05 November 2019 | None | |
| CN | 109800731 | A | 24 May 2019 | None | |
| CN | 105893982 | A | 24 August 2016 | None | |
| CN | 109711259 | A | 03 May 2019 | None | |

Form PCT/ISA/210 (patent family annex) (January 2015)